# EUROPEAN PATENT SPECIFICATION

(11) **EP 0 535 754 B1**
(45) Date of publication and mention of the grant of the patent: **30.07.1997**
(21) Application number: 92203013.5
(22) Date of filing: 01.10.1992
(51) Int. Cl.: A01J 7/00

(54) **An implement for milking animals and a method of after-treating the teats of a milked animal**
Gerät zum Melken von Tieren und Verfahren zur Zitzennachbehandlung eines gemolkenen Tieres
Dispositif de traite d'animaux et procédé pour le post-traitement de pis de l'animal

(30) Priority: 04.10.1991 NL 9101676; 13.02.1992 NL 9200258
(43) Date of publication of application: 07.04.1993
(73) Proprietor: C. van der Lely N.V., NL-3155 PD Maasland (NL)
(72) Inventor: van den Berg, Karel, NL-2971 BR Bleskensgraaf (NL); Fransen, René, NL-3135 ZD Vlaardingen (NL)
(74) Representative: Mulder, Herman

(56) References cited:
- EP-A- 0 323 444
- EP-A- 0 332 231
- FR-A- 2 159 370

## Description

The present invention relates to an implement for milking animals, such as cows, automatically, comprising an automatically operable cleaning member for the cleaning of the teats of an animal before milking, a milking robot with an arm for the connecting of teat cups to the teats of the animal and succesively milking of the animal and disconnecting the teat cups from the teats of the animal.

An implement as described above is known from EP-A-0 323 444. In this implement a bowl-shaped basin which is used for washing and cleaning the udder of the animal is provided on a robot arm. For hygienic reasons and with a view of the quality requirements to be unposed on the milk, cleaning of the teats is important, not only before but also after the milking process itself. Therefore, according to the invention, the implement further comprises an automatically operable after-treating device for after-treating the udder and/or the teats of a milked animal included in the robot arm. By means of this after-treating device an after-treating liquid can be sprayed against the udder of the animal. The after-treating liquid may contain a disinfectant agent. The disinfecting of the udder and/or the teats of the milked animal contributes to the animal getting infected less quickly. According to a further feature of the invention, the after-treating device includes a spray nozzle as well as a supply line having incorporated therein a valve. In conformity with the invention, the valve is arranged near the spray nozzle. As a result, on opening and closing of the valve, the occurrence of initial and final phenomena in the liquid supply to the spray nozzle is prevented, so that almost immediately after that the valve has been opened there is produced by the spray nozzle a preferably fan-shaped spray pattern. In a preferred embodiment according to the invention, the spray nozzle is arranged at the end of the arm of the milking robot. According to the invention, the spray nozzle is located between two teat cups situated at the end of the robot arm. Thus, it will be possible, after the automatic milking, to disinfect the udder and/or the teats of the animal without the intermediary of man.

According to a still further feature of the invention, the spray nozzle is arranged at or near the end of an arm of a milking robot for the automatic milking of animals in such a manner that, relative to this end, there is obtained a forwardly and upwardly directed fan-shaped spray pattern. According to a further feature of the invention, this fan-shaped spray pattern extends at an angle, in the range between 10 and 50°, relative to a vertical plane through the front teat cups. Since the fan-shaped pattern is directed forwardly and upwardly, it is prevented that liquid falls into the teat cups during spraying of the udder and/or the teats.

The invention furthermore relates to a method of after-treating the teats of a milked animal in an implement for the automatic milking of animals, which implement includes a milking robot with an arm for the connecting and disconnecting of the teat cups from the animal's teat and wherein after the animal has been milked, the teat cups are disconnected from the animal's teats and automatically an after-treating liquid is sprayed from said arm against the udder and/or the teats. Thus, after each milking run, without the intermediary of man, the udder and/or the teats of the milked animal are disinfected automatically, which will benefit the animal's hygiene and health. The invention furthermore relates to a method which is characterized in that the after-treating liquid is sprayed in a fan-shaped pattern, while, during spraying, the pattern is moved along under the udder in a direction corresponding to that extending from the plane of the fan-shaped pattern to the teat cups. By thus treating the udder and/or the teats with the after-treating liquid, it is prevented that liquid coming from the fan-shaped pattern and/or the udder/teats drops into the teat cups, for the cups move during spraying into the direction away from the sprayed surface.

For a better understanding of the invention and to show how the same may be carried into effect, reference will now be made, by way of example, to the accompanying drawings, in which:
Figure 1 is a side view of an implement for automatic milking of animals;
Figure 2 is a plan view of a portion of the implement shown in Figure 1;
Figure 3 is a side view of a cleaning member for cleaning the teats of the udder of an animal to be milked;
Figure 4 shows the cleaning member of Figure 3, located on the robot arm of the implement of Figure 1, as well as cleaning means for cleaning the cleaning member in Figure 3;
Figure 5 is a plan view of the implement according to Figure 4;
Figure 6 shows a diagram of an after-treating device for after-treating the udder and/or the teats after the milking of an animal, it having been indicated schematically how the implement has been built up;
Figure 7 shows an after-treating device according to Figure 6 incorporated in the implement of Figure 5, and indicated to an enlarged scale according to the line XVII-XVII in Figure 5.

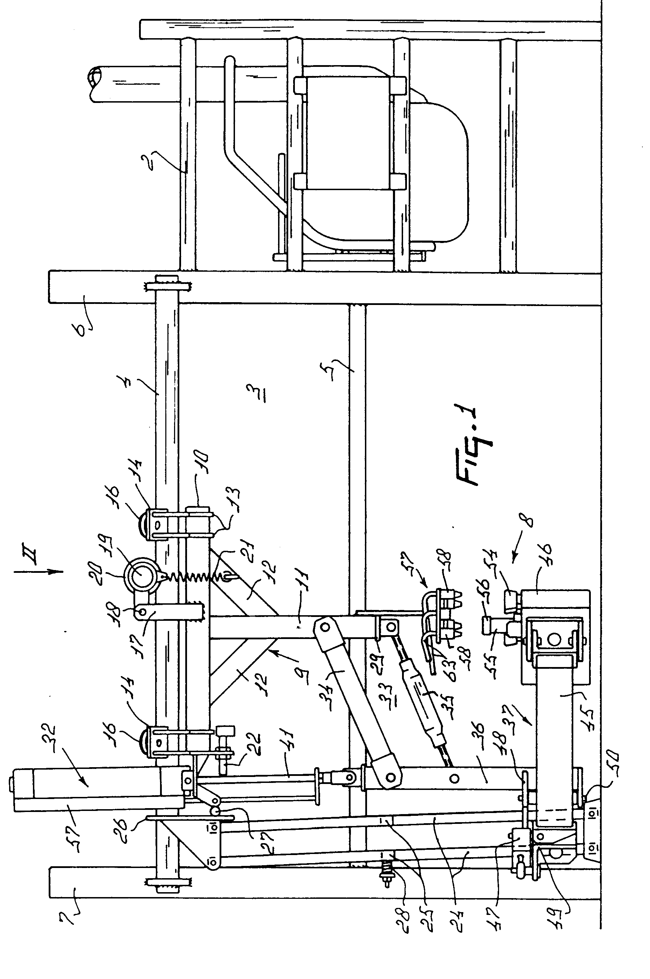

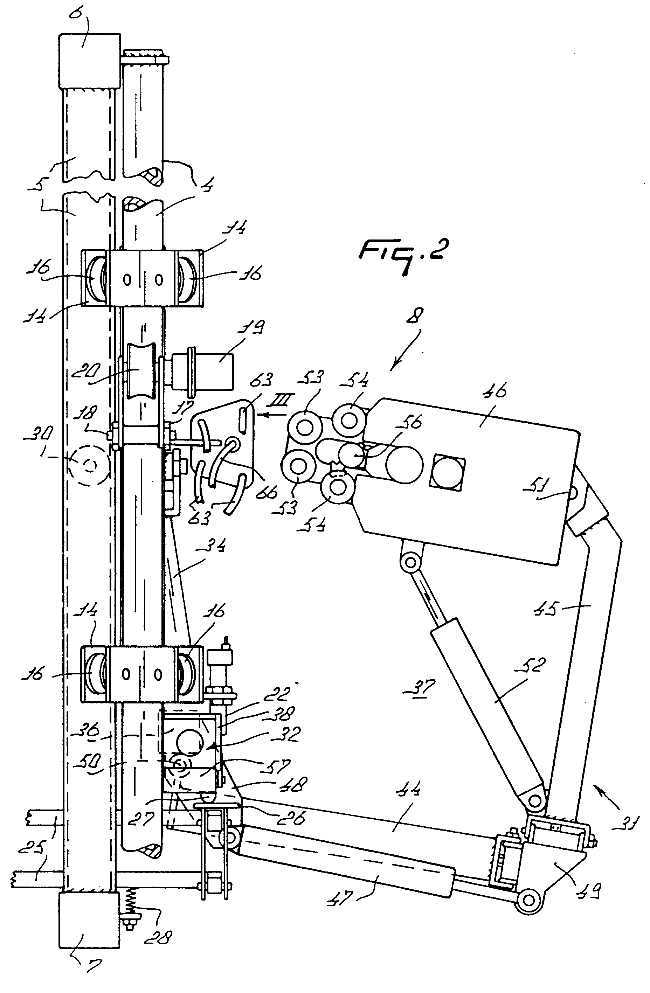

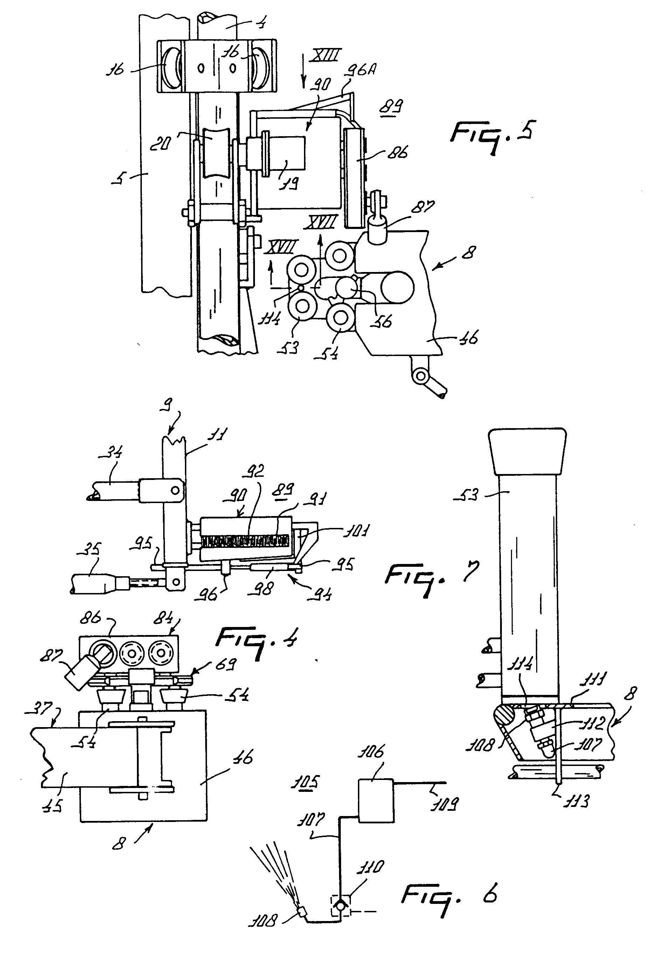

The implement as illustrated in Figures 1 and 2 includes a milking parlour 1 surrounded by a railing 2 which allows the animal a limited freedom of movement. The milking parlour can be entered by the animal from the lateral side at the rear end, whilst the animal can leave same again from this side at the leading end. Since the leading end of the milking parlour is provided with a feeding plant, the cow will advance sufficiently far and arrive in a position in which it can easily be milked. At the longitudinal side of the milking parlour other than the one in which the entrance and exit are located there is provided a fixed frame 3 which forms part of the railing 2, the said frame 3 including a first frame portion 4 and a second frame portion 5. The first frame portion 4 extends parallel to and is located predominantly over the second frame portion 5. In this situation, the first frame portion 4 is rigidly connected to the exterior side of two vertical posts 6 and 7, which form part of the railing 2, whilst the second frame portion 5 is rigidly fitted between these two posts 6 and 7. A milking robot 8 for the automatic milking of animals is movably connected to the first frame portion 4, whilst this milking robot bears against the second frame portion 5, which in further respects is provided at such a height that arms of the milking robot 8 can be moved along its underside to under the cow present in the milking parlour. The milking robot 8 includes a carrier frame 9 for the further portions of the milking robot. By implementing the upper frame portion 4 as a rail, the carrier frame 9 and consequently the entire milking robot 8 can easily be moved along this frame portion. The carrier frame 9 includes a beam 10 which predominantly extends parallel to the first frame portion 4, a pillar 11 which extends perpendicularly thereto and in a vertical downward direction and is rigidly secured thereto and two struts 12. Pairs of supporting elements 13 are located near the ends of the beam 10. Connected to each pair of supporting elements 13 at an angle of approximately 45°, with the aid of supporting plates rigidly connected thereto, are two rollers 16 forming a roller element pair 15, the arrangement being such that the carrier frame 9 is suspended from the upper frame portion 4 in such a manner that it is easily movable therealong. At either side the beam 10 of the carrier frame 9 is provided with two carriers 17. A motor 19 is attached to these carriers in such a manner that it is movable about a pivot shaft 18. This motor 19 drives a roller 20 which preferably has a rubber surface, which roller is pushed by means of a spring member 21 against the upper frame portion 4. Since the spring member 21 is active between the motor 19 and the carrier frame 9, the roller 20 to be driven by the motor 19 is kept in the pushed mode against the upper frame portion 4, so that, when the motor is driven, it is moved length-wise along the upper frame portion 4 and consequently also along the entire carrier frame 9. A sensor 22, which e.g. comprises a laser, is connected to that supporting element 13 which, taken in a direction from the milking parlour, is the rearmost supporting element. With the aid of this sensor 22 it is possible to move the milking robot from a rest position in the longitudinal direction of the milking parlour to a starting position, in which the arms of the milking robot are moved to under the animal present in the milking parlour, and to follow the motions of the animal in the longitudinal direction of the milking parlour. For that purpose, the sensor 22 co-operates with a supporting element 23 which is movable against the rear side of the animal. With the aid of a rod system, which in the present embodiment is constituted by a quadrangular structure, and more in particular a parallelogram structure 24, this supporting element 23 is applied thereon in such a manner that it is pivotal relative to the milking parlour floor. With the aid of two rods 25, the supporting element 23 is provided with a plate 26 which is positioned laterally outside the frame portions 4 and 5 and is arranged such that it can reflect a signal transmitted by the sensor 22. After the sensor 22 has picked-up the reflected signal, it produces a control signal which is a measure of the actual, i.e. the measured, distance between the plate 26 and the sensor 22, by means of which control signal the motor 19 can be driven, the milking robot 8 then being driven in the longitudinal direction of the milking parlour in such a manner that the distance between the plate 26 and the sensor 22 is brought to and maintained at, respectively, a preset value. When the milking robot 8 is in the rest position, then it is in a position which is pushed as far as possible to the rear relative to the frame portions 4 and 5, in which situation the milking robot 8 engages via a contact element 27 the plate 26 and thus maintains the supporting element 23 in a position which is pushed as far as possible to the rear. In other words, the supporting element 23 is locked by the milking robot 8 when the robot is in the rest position. When the milking robot is driven from this rest position into the longitudinal direction of the milking parlour to the starting position, in which the arms of the milking robot are moved to under the animal present in the milking parlour, then the supporting element 23 is unlocked and is pushed under spring action by means of a spring arranged between the parallelogram structure 24 and the railing 2 against the rear side of the cow then present in the milking parlour. When the cow moves forwardly or rearwardly, the supporting element 23 will then continue to be pushed against the rear side of the animal by the pressure of the spring 28, so that the position of the plate 26 is decisive for the position of the animal in the milking parlour in the longitudinal direction and so that, by means of the sensor 22, whilst keeping the distance in the longitudinal direction between the plate 26 and the sensor 22 constant, the milking robot can follow the cow's movements in the longitudinal direction of the milking parlour. The pillar 11 of the carrier frame 9 extends vertically downwardly to slightly below the second frame portion 5. At the bottom side of this pillar 11 there is a horizontal, rearwardly extending strip 29, on which a freely rotatable roller element 30 is provided. The lower frame portion 5 is constituted by a rail and more specifically by a rail in the form of a U-shaped beam, the freely rotatable roller element 30 having been arranged such that it is movable between the two upright edges of the U-shaped beam. Thus, the milking robot 8 bears against the lower frame portion 5 and can in this situation, when the milking robot 8 is moved by means of the motor along the first frame portion 4, move easily along the second frame portion 5. In addition to the carrier frame 9, the milking robot includes a robot arm construction 31 which is predominantly movable in the vertical direction relative to the carrier frame 9 with the aid of an operating cylinder 32. The robot arm construction 31 is movably connected to the carrier frame 9 by means of a quadrangular structure 33. In the embodiment shown, the upper arm 34 of this quadrangular structure 33 is of a fixed length, whilst the lower arm 35 thereof has an adjustable length. This allows the orientation of the robot arm construction 31 to be adjusted to a limited extent. The robot arm construction 31 comprises a predominantly vertical robot arm 36, as well as robot arms 37 which are movable in a predominantly horizontal plane. The robot arm 36 is connected to the pillar 11 of the carrier frame 9 via the quadrangular construction 33. The operating cylinder 32 is operative between the carrier frame 9 and the robot arm 36. Since the orientation of the robot arm 36 is slightly adjustable with the aid of the lower arm 35 of the quadrangular construction 33, the position of the point of contact of the operating cylinder 32 on the robot arm 36 is spatially not fully defined. For this reason, the housing of the operating cylinder 32 is provided, capably of at least a limited degree of pivoting, on a carrier plate 38 connected to the beam 10 of the carrier frame 9. Mounted on this carrier plate 38 are supports 39, between which the housing of the operating cylinder 32 can move about a pivot shaft 40. In the present embodiment, the operating cylinder is designed as a servo-pneumatic positioning cylinder. This means that at the lower end of the piston rod 41 a position feedback rod 43 is fitted by means of a plate 42 connected rigidly thereto, with the aid of which a signal is derived in the portion 57 of the operating cylinder by a potentiometer which indicates the position of the piston rod relative to the cylinder housing, whilst, with the aid of this signal supplied by this potentiometer, the position of the piston rod 41 relative to the cylinder housing can be adjusted to a preset position. The operating cylinder 32 is further provided with an overload protection, whereby, as soon as the animal present in the milking parlour exercises pressure on the robot arm construction 31 by e.g. kicking it with its leg, the robot arm construction 31 can be moved to its lowest position. In Figures 2 and 4, the milking robot 8 is shown in the resting position, wherein it has been moved as far as possible to the rear relative to the frame portions 4 and 5 and wherein the robot arm construction 31 has been brought to the lowest possible position near the soil. When the cow is present in the milking parlour and the milking procedure is to be started, the milking robot 8 is brought from the rest position to the start position, i.e. it is adjusted to the position in which the arms of the milking robot 8 can be moved to under the cow.

The milking parlour is provided for that purpose with arms 44, 45 and 46. The arms 44 and 45 are arranged at a fixed angle of 90° relative to each other. The arms 44 and 45 are therefore moved in conjunction, more specifically by an operating cylinder 47 which is provided between a supporting plate 48 secured to the robot arm 36 and a connecting member 49 arranged between the two arms 44 and 45. The two arms 44 and 45 are rotatable about a predominantly vertical pivot shaft 50 between the supporting plate 48 and a supporting plate 50, the latter plate also being rigidly connected to the robot arm 36, more particularly at its bottom side. With respect to the arm 45, the arm 46 is rotatable about a predominantly vertical pivot shaft 51 and is rotated relative to this shaft 51 with the aid of an operating cylinder 52, which is arranged between the arm 46 and that end of the arm 45 which is located near the connecting member 49. Teat cups 53 and 54, which are connectable to the teats of the cow, are provided near the end of the arm 46. Arranged between the two teat cups 54 is a slide which is movable along the arm 46 and on which there is provided a sensor 55 which by a sector-sequential scanning motion can accurately determine the position of the teats, whereby the operating cylinders 32, 47 and 52 can be computer-controlled in such a manner that the teat cups can be connected in the proper manner to the teats. When the robot arms 44 to 46 have been moved to under the cow, these arms are in a relatively low position, in which the sensor 55 will not yet detect teats. Using the operating cylinder 32, the robot arms 44 to 46 are now lifted step-by-step until the sensor 55 detects one or more teats of the animal. Should during this upward motion the robot arms 44 to 46 have been moved up to such a height that the upper edge of the sensor 55 pushes against the cow's abdomen, then, by means of a switch 56 provided at the upper side of the sensor 55, it is effected that the robot arms can again be moved downwardly, whereafter the positional determination of the teats with the aid of the sensor 55 can be repeated by a gradual lifting of the robot arms.

The implement, as it is described in the foregoing, further includes a cleaning device 57 for the teat cups 53 and 54.

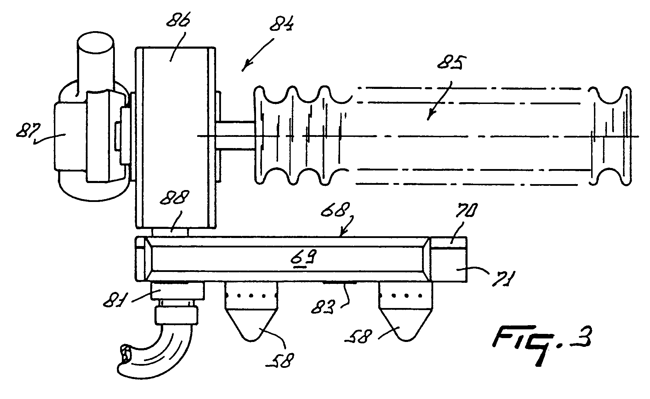

According to Figure 3, the cleaning device 57 includes a cleaning member 84 for cleaning the teats of a milking animal. The cleaning member 84 includes two adjacent cleaning elements in the form of profiled rollers 85, which by their axes are supported rotatably in a gear box 86. The profiled rollers 85 are driven by an electric motor 87 attached against a side of the gear box 86. The cleaning member 84 is bolted with the gear box 86 on the carrier plane 69 by means of two bolts 83. Between the gear box 86 and the carrier plane 69 there are placed spacer rings 88.

In case it should be desirable to clean the teats of the animal to be milked, the carrier plane 69 is sucked via the teat cups 54 on the arm 45 of the milking robot 8 (Figure 4). Hereafter, by means of the sensor 55, the position of the teats of the milking animal is determined, in order that the rollers 85 can be brought to one or more of the teats. After positioning of the rollers 85, the teats are caught between the oppositely rotating profiled rollers, so that the friction between the rollers 85 and the teats ensures that dirt is removed from the teats.

After cleaning of the teats and possibly rinsing of the teat cups 54, the carrier plane 69 is disconnected from the robot arm 45. Then, the carrier plane 69 is stored away in an otherwise non-shown carrier.

The implement as described in the foregoing may furthermore be provided with cleaning means 89 for cleaning the cleaning member 84. The cleaning means 89 comprise a box-like housing 90 attached to the beam 11 of the carrier frame 9 by means of an L-shaped box-profile strip 93 (Figure 4). In the box-like housing 90 there is arranged a slot 91 in two contiguous sides. The slot 91 is covered by means of a row of brush hairs 92. The width of the slot 91 is selected such that it extends the diameter of the profiled rollers 85. Thus, it is possible to place the profiled rollers 85 in the box-like housing 90 by means of the robot arm 37. In order to place the rollers 85 in the box-like housing 90, they must be brought by means of the arm 45 at the level of and in front of the slot 91. By moving the arm 45 in a horizontal plane towards the slot 91, the rollers 85 are subsequently brought into the box-like housing 90. The gear box 86 and the carrier plane 69 then remain outside the box-like housing 90.

According to the invention, the robot arm 45 includes an after-treating device 105 for disinfecting the udder and/or the teats after the animal has been milked. The after-treating device 105 includes a pressure vessel 106 having stored therein the cleaning/disinfecting liquid, as well as a line 107 supplying the liquid to a spray nozzle 108 (Figure 6). To the pressure vessel 106 there is connected a further line 109, via which an overpressure is brought in the pressure vessel 106. The overpressure prevailing in the pressure vessel 106 is preferably three atmospheres. In the supply line 107 to the spray nozzle 108 there is incorporated a valve 110, by means of which the liquid flow to the spray nozzle 108 can be closed and opened, respectively. The valve 110 may be designed as an electromagnetic one. In a preferred embodiment according to the invention, the valve is arranged near the spray nozzle 108, so that the line piece between the valve 110 and the spray nozzle 108 is relatively short. Therefore, after the valve 110 has been opened, the pressurized liquid in line 107 need only cover a relatively short way to the spray nozzle 108. The advantage of this relatively short way to be covered by the liquid is that, after the valve has been opened, the liquid is sprayed by the spray nozzle 108 in a fan-shape almost immediately. As a result, on opening and closing of the valve 110, the occurrence of initial and final phenomena in the production of the fan-shaped spray pattern by the spray nozzle 108 is prevented.

As has been shown in Figure 5, the spray nozzle 108 is located at the end of the robot arm 45 between the two front teat cups 53. In Figure 7 is indicated how the spray nozzle 108 is arranged in the end of the robot arm 45. The spray nozzle 108 is located below the carrier plane 111, on which the teat cups 53 rest. The spray nozzle 108 is positioned in a holder 112 connected to a plate 113, which is perpendicular to the carrier plane 111. The spray nozzle 108 is positioned such in the holder 112 that the fan-shaped spray pattern is directed forwardly and upwardly relative to the end of the robot arm 45. In this connection, the fan-shaped spray pattern encloses with the plate 113 an angle of approximately 20°. In the carrier plane 111 there is arranged an aperture 114, through which the spray liquid of the spray nozzle is sprayed.

The operation of the after-treating device 105 is as follows.

After the milking procedure has been terminated, the teat cups 53 are removed from the teats and are withdrawn to the robot arm 45, where they are supported against the carrier plane 111. Subsequently, the robot arm 45 is positioned such that the fan-shaped spray pattern from the spray nozzle 108 exactly touches the rear side of the udder of the milked animal. The positioning of the robot arm 45 can be effected by means of the sensor 56 and/or by means of animal-depending co-ordinates previously supplied to a control computer of the robot arm 45. After the robot arm 45 has been positioned, the valve 110 is opened, while simultaneously the robot arm is moved in a horizontal plane in the direction of the front side of the animal. Thus, the entire udder is sprayed by the fan-shaped spray pattern. Since the fan-shaped spray pattern is directed forwardly and upwardly relative to the end of the robot arm 45, and since the spraying of the udder is effected from the rear in the direction of the front of the udder, it is prevented that spray liquid originating from the udder and/or the fan-shaped spray pattern falls into the teat cups 53. The way to be covered by the robot arm 45 in the horizontal plane, as well as the height of the spray nozzle 108 to the animal's udder can then be supplied previously per animal to a control computer of the robot arm 45. It is also possible for the height and the distance to be determined by the sensor 56.

## Claims

1. An implement for milking animals, such as cows, automatically, comprising an automatically operable cleaning member (84) for the cleaning of the teats of an animal before milking, a milking robot (8) with an arm (45) for the connecting of teat cups (53; 54) to the teats of the animal and successively milking of the animal and disconnecting the teat cups (53; 54) from the teats of the animal, characterized in that the implement further comprises an automatically operable after-treating device (105) for after-treating the udder and/or the teats of a milked animal included in the robot arm (45).

2. An implement as claimed in claim 1 characterized in that the after-treating device (105) includes a spray nozzle (108) as well as a supply line (107) having incorporated therein a valve (110).

3. An implement as claimed in claim 2, characterized in that the valve (110) is arranged near the spray nozzle (108).

4. An implement as claimed in claim 2 or 3 , characterized in that the spray nozzle (108) is arranged at the end of the robot arm (45) of the milking robot (8).

5. An implement as claimed in claim 4, characterized in that the spray nozzle (108) is located between two teat cups (53) situated at the end of the robot arm (45).

6. An implement as claimed in claim 5, characterized in that the spray nozzle (108) is located under a carrier plane (111) of the robot arm (45), on which the teat cups (53, 54) are supported.

7. An implement as claimed in any one of claims 2 to 6, characterized in that the spray nozzle (108) is arranged at or near the end of an arm (45) of a milking robot (8) for the automatic milking of animals in such a manner that, relative to this end (45), there is obtained a forwardly and upwardly directed fan-shaped spray pattern.

8. An implement as claimed in claim 7, characterized in that the fan-shaped spray pattern extends at an angle, in the range beteween 10 and 50°, relative to a vertical plane through the front teat cups (53).

9. An implement as claimed in any one of claims 2 to 8, characterized in that the top angle of the fan-shaped spray pattern given by the spray nozzle (108) is approximately 45°.

10. An implement as claimed in any one of the preceding claims, characterized in that the after-treating liquid contains a disinfectant agent.

11. A method of after-treating the teats of a milked animal in an implement for the automatic milking of animals, which implement includes a milking robot with an arm (45) for the connecting and disconnecting of the teat cups from the animal's teat and wherein after the animal has been milked, the teat cups are disconnected from the animal's teats and automatically an after-treating liquid is sprayed from said arm (45) against the udder and/or the teats.

12. A method as claimed in claim 11, characterized in that the after-treating liquid is sprayed in a fan-shaped pattern, while, during spraying, the pattern is moved along under the udder in a direction corresponding to that extending from the plane of the fan-shaped pattern to the teat cups.

13. A method as claimed in claim 12, characterized in that each time, after an animal has been milked, the after-treating liquid is sprayed from the rear side of the udder in the direction of the front side thereof.

14. A method as claimed in claim 12 or 13, characterized in that, after the disconnection of the teat cups and prior to the spraying of the udder and/or the teats, the robot arm is brought in a position wherein the plane of the fan-shaped spray pattern exactly touches the udder or lies exactly slightly thereoutside.

## Patentansprüche

1. Vorrichtung zum automatischen Melken von Tieren, wie z. B. von Kühen, mit einer automatisch zu betätigenden Reinigungseinheit (84) zum Reinigen der Zitzen eines Tieres vor dem Melken und einem Melkroboter (8) mit einem Arm (45) zum Anschließen von Zitzenbechern (53; 54) an die Zitzen des Tieres und anschließenden Melken des Tieres sowie zum Abkoppeln der Zitzenbecher (53; 54) von den Zitzen des Tieres,
dadurch gekennzeichnet, daß die Vorrichtung außerdem eine automatisch zu betätigende Nachbehandlungsvorrichtung (105) zum Nachbehandeln des Euters und/oder der Zitzen eines gemolkenen Tieres aufweist, die sich in dem Roboterarm (45) befindet.

2. Vorrichtung nach Anspruch 1,
dadurch gekennzeichnet, daß die Nachbehandlungsvorrichtung (105) eine Sprühdüse (108) sowie eine Zufuhrleitung (107) mit darin eingebautem Ventil (110) hat.

3. Vorrichtung nach Anspruch 2,
dadurch gekennzeichnet, daß das Ventil (110) nahe der Sprühdüse (108) angeordnet ist.

4. Vorrichtung nach Anspruch 2 oder 3,
dadurch gekennzeichnet, daß die Sprühdüse (108) am Ende des Roboterarmes (45) des Melkroboters (8) angeordnet ist.

5. Vorrichtung nach Anspruch 4,
dadurch gekennzeichnet, daß die Sprühdüse (108) zwischen zwei Zitzenbechern (53) angeordnet ist, die am Ende des Roboterarmes (45) angebracht sind.

6. Vorrichtung nach Anspruch 5,
dadurch gekennzeichnet, daß die Sprühdüse (108) unter einer Trägerfläche (111) des Roboterarmes (45) angeordnet ist, auf dem die Zitzenbecher (53, 54) abgestützt sind.

7. Vorrichtung nach einem der Ansprüche 2 bis 6,
dadurch gekennzeichnet, daß die Sprühdüse (108) an oder nahe dem Ende eines Armes (45) eines Melkroboters (8) zum automatischen Melken von Tieren derart angeordnet ist, daß ein relativ zu diesem Ende (45) nach vorn und oben gerichteter fächerförmiger Sprühstrahl erzielt wird.

8. Vorrichtung nach Anspruch 7,
dadurch gekennzeichnet, daß der fächerförmige Sprühstrahl relativ zu einer sich durch die vorderen Zitzenbecher (53) erstreckenden vertikalen Ebene einen Winkel bildet, der zwischen 10 und 50° beträgt.

9. Vorrichtung nach einem der Ansprüche 2 bis 8,
dadurch gekennzeichnet, daß der Spitzenwinkel des von der Sprühdüse (108) erzeugten fächerförmigen Sprühstrahles etwa 45° beträgt.

10. Vorrichtung nach einem der vorhergehenden Ansprüche,
dadurch gekennzeichnet, daß die Nachbehandlungsflüssigkeit ein Desinfektionsmittel enthält.

11. Verfahren zum Nachbehandeln der Zitzen eines gemolkenen Tieres in einer Vorrichtung zum automatischen Melken von Tieren, die einen Melkroboter mit einem Arm (45) zum Anschließen und Abkoppeln der Zitzenbecher von der Tierzitze aufweist,
bei dem die Zitzenbecher nach dem Melken des Tieres von den Tierzitzen abgenommen werden und eine Nachbehandlungsflüssigkeit automatisch von dem Arm (45) auf das Euter und/oder die Zitzen gesprüht wird.

12. Verfahren nach Anspruch 11,
dadurch gekennzeichnet, daß die Nachbehandlungsflüssigkeit in einem fächerförmigen Sprühstrahl gesprüht wird, und daß der Sprühstrahl während des Sprühens unter dem Euter entlang in eine Richtung bewegt wird, die der Richtung entspricht, die sich von der Ebene des fächerförmigen Strahles zu den Zitzenbechern erstreckt.

13. Verfahren nach Anspruch 12,
dadurch gekennzeichnet, daß nach jedem Melken eines Tieres die Nachbehandlungsflüssigkeit von der Rückseite des Euters in Richtung auf seine Vorderseite gesprüht wird.

14. Verfahren nach Anspruch 12 oder 13,
dadurch gekennzeichnet, daß der Roboterarm nach dem Abkoppeln der Zitzenbecher und vor dem Besprühen des Euters und/oder der Zitzen in eine Position gebracht wird, in der die Ebene des fächerförmigen Sprühstrahles exakt auf das Euter trifft oder geringfügig außerhalb desselben liegt.

## Revendications

1. Dispositif pour traire automatiquement des animaux tels que des vaches, comprenant un organe nettoyeur (84) fonctionnant automatiquement pour nettoyer les trayons d'un animal avant la traite, un robot trayeur (8) avec un bras (45) pour relier des godets de trayons (53; 54) aux trayons de l'animal et pour faire successivement la traite de l'animal et la séparation des godets de trayons (53; 54) d'avec les trayons de l'animal,
**caractérisé** en ce que le dispositif comprend en outre un dispositif (105) de post-traitement fonctionnant automatiquement pour le post-traitement du pis et/ou des trayons d'un animal venant d'être trait, ce dispositif étant inclus dans le bras de robot (45).

2. Dispositif selon la revendication 1, caractérisé en ce que le dispositif de post-traitement (105) comporte une buse pulvérisatrice (108) ainsi qu'une conduite d'alimentation (107) dans laquelle est incorporée une vanne (110).

3. Dispositif selon la revendication 2, caractérisé en ce que la vanne (110) est disposée près de la buse pulvérisatrice (108).

4. Dispositif selon la revendication 2 ou 3, caractérisé en ce que la buse pulvérisatrice (108) est disposée à l'extrémité du bras de robot (45) du robot trayeur (8).

5. Dispositif selon la revendication 4, caractérisé en ce que la buse pulvérisatrice (108) est située entre deux godets de trayons (53) situes a l'extrémité du bras de robot (45).

6. Dispositif selon la revendication 5, caractérisé en ce que la buse pulvérisatrice (108) est située sous un plan porteur (111) du bras de robot (45) sur lequel les godets de trayons (53, 54) sont supportés.

7. Dispositif selon l'une quelconque des revenications 2 à 6, caractérisé en ce que la buse pulvérisatrice (108) est disposée à l'extrémité d'un bras (45) d'un robot trayeur (8) pour la traite automatique des animaux, ou bien près de ladite extrémité, de telle manière qu'on obtienne, par rapport à cette extrémité (45), un jet pulvérisé en éventail dirigé vers l'avant et vers le haut.

8. Dispositif selon la revendication 7, caractérisé en ce que le jet pulvérisé en éventail forme un angle compris entre 10 et 50° par rapport à un plan vertical passant par les godets de trayons antérieurs (53).

9. Dispositif selon l'une quelconque des revendications 2 à 8, caractérisé en ce que l'angle au sommet du jet pulvérisé en éventail projeté par la buse pulvérisatrice (108) est d'environ 45°.

10. Dispositif selon l'une quelconque des revendications précédentes, caractérisé en ce que le liquide de post-traitement contient un agent désinfectant.

11. Procédé de post-traitement des trayons d'un animal venant d'être trait dans un dispositif de traite automatique des animaux, ce dispositif comportant un robot trayeur avec un bras (45) pour relier les godets de trayons aux trayons de l'animal et pour les en détacher, et dans lequel, après la traite de l'animal, les godets de trayons sont détachés des trayons de l'animal et un liquide de post-traitement est projeté automatiquement à partir dudit bras (45) contre le pis et/ou les trayons.

12. Procédé selon la revendication 11, caractérisé en ce que le liquide de post-traitement est pulvérisé en forme d'éventail tandis que, pendant la pulvérisation, le jet en éventail est mis en mouvement sous le pis dans une direction correspondant à celle s'étendant du plan du jet en éventail jusqu'aux godets de trayons.

13. Procédé selon la revendication 12, caractérisé en ce que, chaque fois après la traite d'un animal, le liquide de post-traitement est pulvérisé depuis le côté postérieur du pis en direction du côté antérieur du pis.

14. Procédé selon la revendication 12 ou 13, caractérisé en ce que, après le débranchement des godets de trayons et avant l'arrosage par pulvérisation du pis et/ou des trayons, le bras de robot est amené en une position dans laquelle le plan du jet pulvérisé en éventail touche exactement le pis ou bien se situe exactement légèrement à l'extérieur du pis.
